Europäisches Patentamt

European Patent Office

Office européen des brevets

(19)

(11) Publication number: **0 271 990**
**A2**

(12) # EUROPEAN PATENT APPLICATION

(21) Application number: **87309900.6**

(22) Date of filing: **09.11.87**

(51) Int. Cl.4: **H01B 3/44**

(30) Priority: **19.11.86 JP 276287/86**

(43) Date of publication of application:
**22.06.88 Bulletin 88/25**

(84) Designated Contracting States:
**AT BE CH DE ES FR GB GR IT LI LU NL SE**

(71) Applicant: **JUNKOSHA CO. LTD.**
**25-25, Miyasaka 2-chome**
**Setagaya-ku Tokyo156(JP)**

(72) Inventor: **Yamamoto, Masato**
**102 Bell-Hight-Inari 1-6 Inari 2-ch.Kubo**
**Iruma-shi Saitama(JP)**

(74) Representative: **Taylor, Derek George et al**
**Mathisen, Macara & Co. The Coach House**
**6-8 Swakeleys Road**
**Ickenham Uxbridge UB10 8BZ(GB)**

(54) An insulated wire comprising a polytetrafluoroethylene coating.

(57) An insulated wire comprises a centre conductor wire having at least one covering layer thereover of ram-extruded, foamed polytetrafluoroethylene (PTFE). A non-foamed PTFE layer can be located between the wire and the foamed layer. An outer covering layer can comprise non-foamed PTFE. Preferably in the method of producing the insulated wire, the PTFE is also drawn, expanded and rendered porous.

EP 0 271 990 A2

# AN INSULATED WIRE COMPRISING A POLYTETRAFLUOROETHYLENE COATING

The present invention relates to insulated wire.

Japanese Patent Publication (Kokoku) No.59-501,402 discloses a method of manufacturing an insulated wire, the insulating layer of which is formed of a porous layer and a non-porous layer of insulating material. The process is performed under variable physical conditions such as linear speed, volumetric flow rate and temperature.

However, even though the process with adjustable physical conditions may be suitable for the manufacture of porous tubular products, it is unsuitable for use in the manufacture of precision electric cables. In such manufacture the conductor and the insulating sheath are produced at different speeds, and therefore in the final extruded and drawn insulated wire the above-described method does not provide intimate contact between the conductor and insulation.

The present invention is aimed at elimination of the above-mentioned disadvantages and can be incorporated in existing lines for the manufacture of extruded and drawn insulated wires. The invention provides intimate contact between the conductor and the insulating layer.

According to one aspect, the present invention provides an insulated wire comprising a conductor wire having at least one covering layer thereover of ram-extruded polytetrafluoroethylene (PTFE) containing a foaming agent. The insulated wire may have at least one additional layer thereover of PTFE containing no foaming agent.

According to another aspect, the present invention provides an insulated wire comprising a conductor wire having at least one covering layer thereover of ram-extruded, foamed PTFE. The insulated wire having a foamed PTFE layer may also have at least one additional layer thereover of unfoamed PTFE. The foamed PTFE may be drawn, expanded and porous and the unfoamed PTFE may be drawn, expanded and porous.

According to a further aspect, the present invention provides a method of production of an insulated wire which comprises ram-extruding PTFE containing a foaming agent to form a coating around a conductor wire, ram-extruding around the coating a further layer of PTFE not containing a foaming agent, and heating the coated wire to form said foaming agent and to cure the PTFE.

The invention will now be particularly described, by way of example, with reference to the accompanying drawings in which:-

Figure 1 is a cross-sectional view of one embodiment of insulated wire according to the invention;

Figure 2 is a cross-sectional view of another embodiment of insulated wire according to the invention;

Figure 3 is a cross-sectional view of a conventional extruded insulated wire; and

Figure 4 is a cross-sectional view of a conventional extruded and drawn insulated wire.

An insulated wire is provided comprising a centre conductor wire having at least one covering layer thereover of ram-extruded, foamed polytetrafluoroethylene (PTFE). Preferably the foamed PTFE is also drawn, expanded and porous.

Preferably the insulated wire is formed by providing an extruded and drawn wire conductor and covering it with at least one ram-extruded layer of a high-molecular weight insulating resin material of PTFE arranged around the outer periphery of the conductor, which layer contains a foaming agent, the unit subsequently being drawn and heated. The insulated wire may include at least one other insulating layer of PTFE.

Because at least one of the above-mentioned layers is formed of a high-molecular weight, ram-extruded PTFE material which contains a foaming agent, heating after extrusion causes foaming and formation of pores in the high-molecular weight material. Because at the same time the unit is moved in the axial direction of the conductor wire, in the course of cooling the high-molecular weight material shrinks, thereby providing intimate contact between the conductor and insulation.

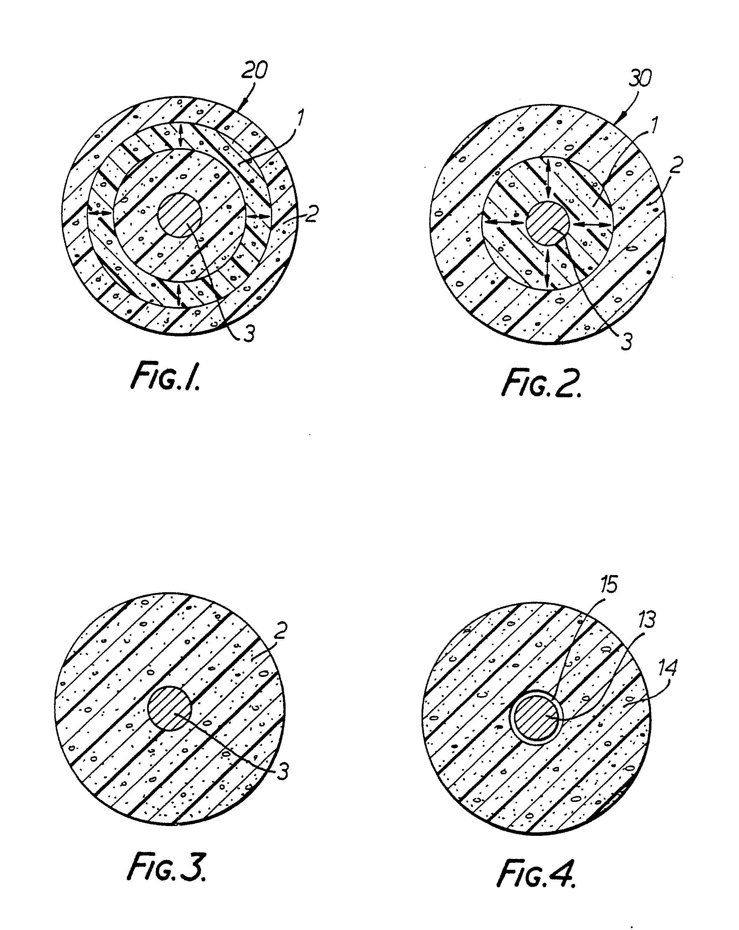

In Figure 1, the periphery of a central conductor 3 is surrounded first by a ram-extruded layer 2 of a high-molecular weight PTFE resin, then by a ram-extruded layer 1 of a high-molecular weight resin (PTFE) which contains a foaming agent, and then by another ram-extruded, high-molecular weight resin (PTFE) layer 2. The layers are extruded to form a unit which, after drawing and heating forms, with the conductor, an extruded and drawn insulated wire 20. A suitable foaming agent is Expandex 5-phenyltetrasol (Expandex is a trade mark).

In the embodiment shown in Figure 2, the periphery of a central conductor 3 is surrounded by a ram-extruded, high-molecular weight resin (PTFE) 1 which contains the foaming agent, and then by a ram-extruded, high-molecular weight resin (PTFE) 2. Following extrusion, the insulation is drawn and heated. As a result, an insulated wire 30 having drawn insulation is obtained.

The manner of manufacturing the insulated wires 20 and 30 shown in Figures 1 and 2 will now be considered in greater detail:

Central conductor 3, which is supplied from a feeder (not shown in the drawings), is passed through an extruder in which its periphery is coated by a ram-extruded layer 2 of a high-molecular weight PTFE resin and by a ram-extruded layer 1 of a high-molecular weight PTFE resin which contains a foaming agent. The coating can be performed in a three-layer manner, or in a two-layer manner, as shown in Figures 1 and 2, respectively. A different colour can be used for different layers by incorporation of pigment in the resins. The ram-extruded layers hold central conductor 3 in place. If the take-up speed of the unit exceeds the volumetric speed of the PTFE ram extrusion, the resin layers are stretched or expanded and can acquire porosity. After extrusion and such porosity-forming treatment, the unit is passed through a furnace where, under the effect of heat, the foaming agent is volatilized and the volume of ram-extruded, high-molecular weight PTFE resin layer 1, which contains the above-mentioned foaming agent, is increased. The forces developed in this process are indicated in Figures 1 and 2 by arrows. As a result of this treatment, intimate contact is provided between central conductor 3 and ram-extruded, high-molecular weight PTFE resin layer 2 (Fig.1), or between central conductor 3 and ram-extruded, high-molecular weight PTFE resin layer 1 (Fig.2) which contained the foaming agent.

In addition to intimate contact between central conductor 3 and the insulating layer obtained at the stage of heating, the porous (drawn) ram-extruded, high-molecular weight PTFE resin layer 2 and ram-extruded, high-molecular weight PTFE resin layer 1, which contains the foaming agent, are cured and they form a permanent porous structure. After heating, the insulated wire is cooled and wound in the form of an extruded and drawn insulated wire.

For comparison, Figure 3 shows a cross-sectional view of a conventional extruded and drawn insulated wire which consists of a central conductor 3 and a ram-extruded, high-molecular weight PTFE resin layer 2. Because central conductor 3 and the ram-extruded high molecular weight PTFE resin have different heat-expansion coefficients, the heating stage does not provide intimate contact between them, so that a space is left between the conductor and the insulation. In other words, as shown in Figure 4, after stretching, heating and cooling, the central conductor 13, expanded by heating, returns into its initial state and a gap 15 is formed which cannot be completely eliminated, even after cooling and shrinking of the stretched and porous ram-extruded, high-molecular weight PTFE resin layer 14.

Although, due to to simultaneous drawing and curing, conventional extruded and drawn insulated wire can be produced with high output, the final conventional product often appears unsuitable for practical applications because of the loose contact between the conductor and the surrounding insulation. In contrast, the extruded and drawn insulated wire of the present invention provides intimate contact between the conductor and insulation. Therefore, it is more suitable for practical applications than conventional insulated wire.

## Claims

1. An insulated wire comprising a conductor wire having at least one covering layer thereover of ram-extruded polytetrafluoroethylene (PTFE) containing a foaming agent.

2. An insulated wire according to claim 1 having at least one additional layer thereover of PTFE containing no foaming agent.

3. An insulated wire comprising a conductor wire having at least one covering layer thereover of ram-extruded, foamed PTFE.

4. An insulated wire according to claim 3 having at least one additional layer thereover of unfoamed PTFE.

5. An insulated wire according to claim 3 wherein said foamed PTFE is drawn, expanded and porous.

6. An insulated wire according to claim 4 wherein said unfoamed PTFE is drawn, expanded and porous.

7. A method of production of an insulated wire which comprises ram-extruding PTFE containing a foaming agent to form a coating around a conductor wire, ram-extruding around the coating a further layer of PTFE not containing a foaming agent, heating the coated wire to foam said foaming agent and to cure the PTFE.

8. A method adcording to claim 7 including the initial step of forming an inner coating, in contact with the conductor wire, of PTFE not containing a foaming agent.

9. A method according to claim 7 or claim 8 in which the PTFE layers are stretched during the heating step to expand the PTFE and impart porosity thereto.

0 271 990

Fig.1.

Fig.2.

Fig.3.

Fig.4.